(19) Europäisches Patentamt

European Patent Office

Office européen des brevets

(11) Veröffentlichungsnummer: **0 505 616 A1**

## (12) EUROPÄISCHE PATENTANMELDUNG

(21) Anmeldenummer: **91120669.6**

(22) Anmeldetag: **02.12.91**

(51) Int. Cl.⁵: **H04N 13/04**, G02B 27/22

(30) Priorität: **03.12.90 DE 4038475**

(43) Veröffentlichungstag der Anmeldung:
**30.09.92 Patentblatt 92/40**

(84) Benannte Vertragsstaaten:
**AT BE CH DE ES FR GB GR IT LI LU NL SE**

(71) Anmelder: **Stadler, Walter**
**Landgrafenring 11**
**W-6050 Offenbach(DE)**

(72) Erfinder: **Stadler, Walter**
**Landgrafenring 11**
**W-6050 Offenbach(DE)**

(54) **Verfahren zur räumlichen Darstellung und Wiedergabe von dreidimensionalen bewegten Bildern auf Anzeigevorrichtungen.**

(57) Zur Erzeugung des Eindruckes eines dreidimensionalen Bildes werden zwei im Augabstand aufgenommene Bilder in senkrechte bildpunktbreite Streifen zerlegt und gleichzeitig auf eine Projektionsfläche, welche aus senkrechten Prismenstreifen besteht, so projiziert, daß die unterschiedlichen Bilder durch den durch die Prismen hervorgerufenen unterschiedlichen optischen Weg nur beim entsprechenden Auge des Betrachters ankommen. Dieses Verfahren ist farbtauglich und erfordert keine Hilfen, wie Spezialbrille.

EP 0 505 616 A1

Verfahren zur räumlichen Darstellung und Wiedergabe von dreidimensionalen bewegten Bildern auf Fernseh schirmen und ähnlichen Projektionsflächen.

Die Erfindung betrifft ein Verfahren, bei dem die beiden für die Erzeugung eines räumlichen Bildeindruckes beim Beobachter notwendigen unterschiedlichen Teilbilder für die beiden Augen durch unterschiedliche optische Wege zum jeweiligen Auge geleitet werden.

Dies geschieht prinzipiell durch Ausnutzung der unterschiedlichen Blickachsen der beiden Augen beim betrachten eines Bildes in endlicher Entfernung.

Die Projektionsfläche der Bildwiedergabeeinrichtung beinhaltet immer gleichzeitig die Bildinformation für beide Augen, d.h. die Gesamtinformation zur Bildung des räumlichen Bildes beim Betrachter.

Durch die Einschaltung von unterschiedlichen Prismen in den optischen Weg, sowie der Anbringung von Schlitz masken zur Abgrenzung der zulässigen Betrachtungs winkel für die jeweilige Bildinformation werden die unterschiedlichen Bilder für die beiden Augen nur innerhalb definierter Betrachtungswinkel sichtbar. Die Neigung der Prismenflächen ist so vorzunehmen, das die optimalen unterschiedlichen Betrachtungswinkel dem unterschiedlichen Augachsenwinkel bei Betrachtungsabstand entsprechen.

Dieses Prinzip wird im Grundsatz in vereinfachter Form auch bei den bekannten 3D Postkarten benutzt.

Das beschriebene Prinzip wird durch Unterteilung der beiden (parallaxen) Bildinformationen in bildpunktbreite senkrechte Streifen und der Abbildung dieser Streifen auf unterschiedlichen wechselseitigen Prismenstreifen welche Bestandteil des Projektionsschirm sind, umgesetzt.

Da die Prismen bildpunktbreit wechselseitig angeordnet sind, werden die Bilderstreifen der beiden Ausgangsbilder ineinander wechselweise geschachtelt zu einem Gesamtbild zusammengefügt und dieses Gesamtbild auf dem Bildschirm abgebildet.

Auf dem Bildschirm werden also immer beide Bildinhalte dargestellt. Die Selektion des seitenrichtigen Bildes für das jeweilige Auge erfolgt durch die Übereinstimmung der unterschiedlichen optischen Wege, welche sich durch die unterschiedlichen Prismen ergeben mit den unterschiedlichen Blickachsen der beiden Augen.

Die Bildinformation für das "andere" Auge erscheint durch den ungünstigen Betrachtungswinkel der "anderen" Prismenstreifen in einem Bereich des Prismas, der durch die Schlitzmaske abgedeckt und deshalb nicht sichtbar ist.

Der Vorteil dieses Verfahrens ist darin zu sehen, daß für die Erzielung des räumlichen Effektes keine über die Bereitstellung der zusätzlichen Bildinformation hinausgehende Zusatzeinrichtung (wie Spezialbrille mit den entsprechenden Nachteilen) notwendig ist.

Das Verfahren ist voll farbtauglich und dafür ausgerüstete Wiedergabegeräte können auch für konventionelle zweidimensionale Bildwiedergaben benutzt werden

## Patentansprüche

1. Verfahren zur räumlichen Darstellung und Wiedergabe von dreidimensionalen bewegten Bildern auf Fernsehbildröhren und ähnlichen Anzeigeelementen wie Flüssigkristallschirmen sowie entsprechenden Projektionsleinwänden,

   dadurch gekennzeichnet, daß die beiden zur Erzeugung eines räumlichen Bildeindrucks mit horizontaler Parallaxe gleichzeitig aufgenommenen Bilder in senkrechte bildpunktbreite Streifen unterteilt und auf wechselseitig geneigte entsprechend breite Prismenstreifen projiziert werden. Der dadurch entstehende unterschiedliche Knick im optischen Weg führt zu örtlich unterschiedlichen Abbildungen auf der anderen Prismenseite. Durch Anbringung von senkrechten Schlitzmasken wird die jeweilige Bildinformation nur für unterschiedliche Betrachtungswinkel sichtbar. Die Neigung der Prismenflächen zueinander wird so gewählt, daß die in der Maske verbleibenden Betrachtungswinkel mit den für den in endlichem Abstand stehenden Beobachter entstehenden Winkel der beiden Augachsen zueinander übereinstimmen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 151 331 (NEC HOME ELECTRONICS LTD)<br>* Seite 8, Zeile 10 - Seite 9, Zeile 15; Abbildung 3 *<br>--- | 1 | H04N13/04<br>G02B27/22 |
| X | PATENT ABSTRACTS OF JAPAN<br>vol. 11, no. 220 (E-524)(2667) 16. Juli 1987<br>& JP-A-62 038 695 ( MATSUSHITA ) 19. Februar 1987<br>* Zusammenfassung *<br>--- | 1 | |
| A | PATENT ABSTRACTS OF JAPAN<br>vol. 10, no. 133 (E-404)(2190) 17. Mai 1986<br>& JP-A-60 261 284 ( TOSHIBA K.K ) 24. Dezember 1985<br>* Zusammenfassung *<br>--- | 1 | |
| A | EP-A-0 226 115 (MEACHAM,G.B.KIRBY)<br>* Seite 6, Zeile 1 - Zeile 13; Abbildung 1 *<br><br>----- | 1 | |
| | | | **RECHERCHIERTE SACHGEBIETE (Int. Cl.5)**<br><br>H04N<br>G02B |

Der vorliegende Recherchenbericht wurde für alle Patentansprüche erstellt

| Recherchenort | Abschlußdatum der Recherche | Prüfer |
|---|---|---|
| DEN HAAG | 23 JULI 1992 | BEQUET T.P. |